# EUROPEAN PATENT SPECIFICATION

(11) **EP 4 345 245 B1**
(45) Date of publication and mention of the grant of the patent: **06.08.2025**
(21) Application number: 22212864.7
(22) Date of filing: 12.12.2022
(51) Int. Cl.: E21B 17/18, E21B 43/08, E21B 43/10

(54) **A METHOD FOR INSTALLATION OF A MODULAR GROUNDWATER WELL SCREEN IN A BOREHOLE AND A GROUNDWATER WELL SCREEN MODULE**
VERFAHREN FUR INSTALLIEREN EINES MODULAREN GRUNDWASSERFILTERS IN EIN BOHRLOCH UND EIN GRUNDWASSERFILTERMODUL
PROCEDE D'INSTALLATION D'UN FILTRE MODULAIRE POUR EAU SOUTERRAINE DANS UN TROU DE FORAGE ET MODULE DE FILTRE POUR EAU SOUTERRAINE

(30) Priority: 27.09.2022 PL 44236922
(43) Date of publication of application: 03.04.2024
(73) Proprietor: Akademia Gorniczo-Hutnicza im. Stanislawa Staszica w Krakowie, 30-059 Krakow (PL)
(72) Inventor: SOLECKI, Tadeusz, 30-698 Kraków (PL); SOLECKI, Marek, 30-698 Kraków (PL); STOPA, Jerzy, 31-235 Kraków (PL); WISNIOWSKI, Rafal, 30-698 Kraków (PL); ZIAJA, Jan, 31-564 Kraków (PL)
(74) Representative: Rogozinska, Alicja

(56) References cited:
- CN-A- 102 943 648
- CN-A- 109 611 060
- JP-A- H09 126 353
- US-B2- 7 677 322

## Description

The invention relates to a method for installation of a modular groundwater well screen in a drilling and a well screen module, which are applicable for the extraction of water, especially from water-bearing layers having a small thickness and being located at shallow depths, also such as located under rivers, lakes and other water basins, as well as for the purpose of dewatering of the ground, for example in the areas of a landslide. The invention is also used in the process of removing contaminants from the soil and water environment.

Horizontal and directional drilling technologies are widely known and used, aiming, among others, to overcome natural or artificial terrain obstacles such as: buildings, roads or rivers. Numerous literature items have been devoted to these technologies, for example, such as "HDD Practice Handbook" (ed. H. J. Bayer, Vulkan Verlag GmbH, 2005) or "Horizontal Directional Drilling, Utility and Pipeline applications" (D. Willoughby, McGraw-Hill Education, 2005). Solutions relating to detailed problems of directional drilling technology and installation of pipes in directional boreholes are also revealed in the worldwide patent literature, for example: US6682264B1, US4953638A, CA2221069C, CN102953683A.

A method of making drainage by trenchless method is known from a description of the Polish application No. PL371067A1, which is characterized in that firstly a borehole is drilled horizontally into which borehole a drain, especially prepared with rings welded every 2 m or 2.5 m is inserted to protect a filter mat from damage. The filter mat is wrapped around a drainage pipe in a space between the rings. The filter mat is made of coir and polypropylene fibers in a ratio of 1:1. In addition, the filter mat is wrapped with geotextile for protection. Before inserting the drain into the horizontally drilled pipes, it is checked whether all of the rings welded to the drain can pass through a control section of the drilling pipe. The diameter of the drain can be varied depending on specific needs.

Further US5597045A discloses a process for laying an underground pipework network for liquids and gases. The process comprises a step of providing at least one borehole with a section having at least a part running horizontally, as well as also having an inlet section and an outlet section, that is provided in predetermined soil layers by means of a controlled drilling device. Then, in the part forming a horizontal section, the borehole is widened by using an expansion head, and simultaneously a protective pipeline is inserted to the borehole, which protective pipe is equipped with a coaxially located exploitation conduit that is perforated in the section running under the ground water table (ground water level). A filter material is arranged between the pipeline and the perforated exploitation conduit, which material can be, for example, gravel or plastic. After introduction of the perforated conduit to the designated place, the protective pipeline is removed. In order to reduce the frictional forces during pulling out the outer protective pipeline, plastic granulate can be used as filter filling or water is injected into the perforated conduit.

International patent application WO2006/045859A1 discloses a method of providing a drainage system for intake of seawater, consisting in accomplishment of directional pilot drillings using a drilling rig positioned behind the coastline (shoreline). Single or multiple directional drillings are made from behind the shoreline, and directed towards the sea, and then after reaching a production zone they are guided horizontally therein (in the zone) and then slightly upwards towards the seabed. Afterwards, the boreholes are widened using a broach reamer with a front guidance system. After the borehole is widened and cleaned using a drilling mud, connected sections (modules) of a pipeline, having perforations in the production zone segment, which is the actual filter segment, are introduced into this borehole. In this process the drilling mud keeps suspended sand that may be present in the borehole and thus stabilizing the borehole and provides lubrication during installation of the pipeline. Once the pipeline is installed, the mud is pumped out and then in the pipeline sections that do not run into the production zone layer a seal is provided around it by injecting cement grout. The seaward end of the pipeline (conduit) is closed with a sealed plug, and afterwards the pipeline is cleaned with a cleaning cylinder, and, if necessary, compressed air is allowed to be injected into the ground drain to open existing connections and to improve the efficiency of the process.

From US6581683B2 description, the water filter is known that contains two coaxial perforated pipes and in the space created between them a granular filter material is arranged in the form of UPVC granules, sand, gravel or other fine-grained material, which after being thickened (compacted), prevents foreign particles to enter while simultaneously allowing the flow of liquids through it. The inner pipe is additionally protected on its outer side with a nylon mesh. In the invention disclosed US8479815B2, for the purpose of drawing water from sand layers lying underneath seabed perforated pipes are used, constituting a sieve section that is surrounded with a package of filters disposed around it. The sieve section is centered by means of centering guides between a temporary housing, and is connected to the ground surface by means of a pipe set.

In known solutions, the filter segment can be divided into sections, also having a different design, which sections are connected in a permanent or detachable manner directly to each other or, for example, via rings, as disclosed in US9416634B2.

In another U.S. patent No. US6422318B1, a horizontal well system is disclosed, comprising a perforated pipe located in a substantially horizontal position, that is positioned in an water-bearing layer underneath the level of the ground water table, and that is connected to the surface on its both sides by pipe sets and provided with pumping units. Further relevant prior art is disclosed in CN109611060A, CN102943648A, US7677322B2 and JPH09126353A.

The purpose of the invention is to develop the design of a modular well screen and a method of its installation in a borehole (a drilling), which solve the problem of overcoming a movement resistance arising during the introduction of a pipeline into such borehole (drilling).

**The essence of the method** of installation a modular underground water filter (well screen) in horizontal borehole (drilling), having a both-sides connection to the ground surface, being characteristic in that sections of casing pipes are introduced into the borehole, made by known methods, throughout the entire length of the borehole, then into the casing pipes: exploitation pipe section, well screen (filter) modules and again exploitation pipe section are introduced successively, while connecting such modules one to each other in series during inserting of them into the casing pipes, afterwards the casing pipes are removed and the pumping assembly is installed, **consists in that** before starting the operation of insertion of the exploitation pipe sections and filter modules (well screen modules), the casing pipe sections at least in their horizontal section are filled with water, whereas the well screen modules that contain removable displacement elements having adjustable displacement are connected one to each other mechanically by means of mechanical connectors, as well as pneumatically by means of pneumatic connectors in the course of attaching successive well screen modules, wherein the last displacement element is attached by means of a hoist rope to a winch located on or over the ground surface, and via a pneumatic conduit it is connected to a compressor, by which the air pressure is regulated therein, thus generating a buoyant force that counter-balances or reduces the weight of the well screen modules and exploitation pipes, in such a way as to minimize the resistance to motion that results from the friction of slid-clamp bands as they being inserted into the casing pipes, whereas after the installation is completed, the displacement elements are removed by means of the hoist rope connected to the winch on the surface.

Preferably the insertion of the exploitation pipes and well screen modules into the casing pipes is carried out by pulling them in by means of a extraction device, via an extraction duct.

Also preferably the well screen modules or sections of the exploitation pipes, during their insertion into the casing pipes are connected one to each other by means of clamp connectors.

**The essence of the** well screen **module,** containing a matrix of a perforated pipe with a granular filter material arranged around its periphery, consists in **that** the granular filter material is arranged inside a cover made of a filter mesh or filter geotextile, that cover is fixed on the perforated pipe by means of slid-clamp bands, and furthermore at least one removable displacement element having a variable displacement is positioned inside the section of the perforated pipe, that displacement element having a lid at each end, which lid is equipped with a mechanical catch and a pneumatic quick coupling.

Preferably the lids of the displacement element, which is the form of a pneumatic sleeve, are additionally connected one to each other by means of at least one additional strand, located inside or outside of the displacement element.

Furthermore, preferably the perforated pipe has upsets at both ends.

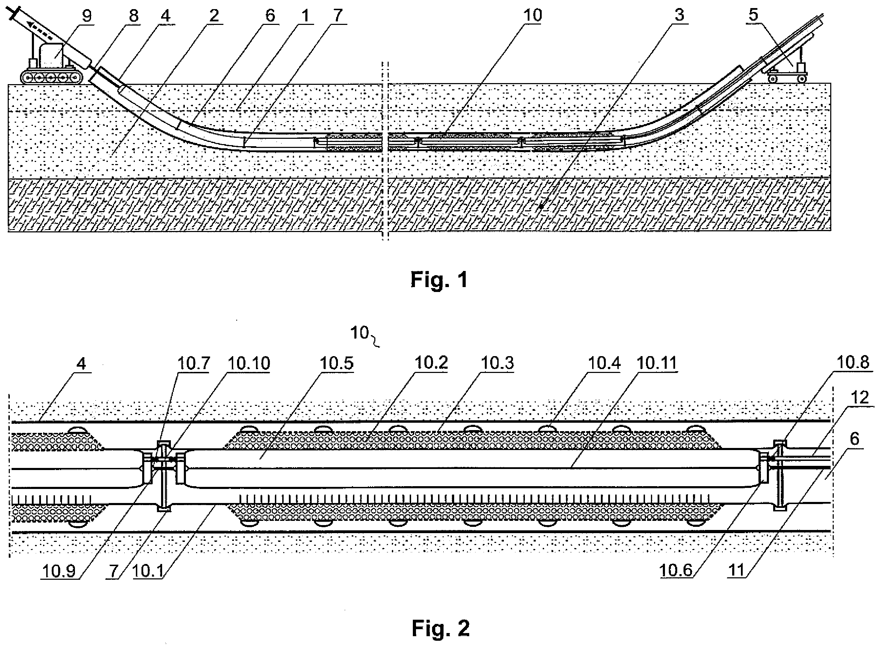

The invention solution, in embodiments, is illustrated in the drawing, in which Fig. 1 shows a simplified cross-section of a modular groundwater filter (well screen) during its installation in a horizontal borehole, while Fig. 2 - shows a view on an enlargement of a detail of the active part of the well screen (filter).

A horizontal borehole (drilling) has been made below the ground water table 1 in a water-bearing layer 2 which lies on an impermeable layer 3 (Fig. 1). Then, the borehole has been temporarily protected by means of casing pipes 4, which are completely filled with water. Subsequently, into the water-filled casing pipes 4 successive segments of extraction pipes 6 are inserted, using a feeder 5, which segments have been connected one to each other by means of clamp connectors 7 and pulled into the borehole by an extraction duct 8 that is connected to an extraction device 9. To the end of the last segment of the first section of the extraction pipes 6 the first well screen module 10 is then connected, and number of successive well screen modules 10 are attached to the first well screen module, each of them containing a matrix of a perforated pipe 10.1, having upsets at both its ends, around which perforated pipe the granular filter material 10.2 is arranged that is located inside a cover 10.3 made of a filter mesh being fixed to the perforated pipe 10.1 by means of slid-clamp bands 10.4, wherein inside the perforated pipe a removable displacement element 10.5 having variable displacement, adjustable by compressed air is located, which displacement element is formed as a pneumatic sleeve, that at both its ends is provided with lids 10.6 - each of them equipped with a mechanical catch 10.7 and a pneumatic quick coupling 10.8. Operation of connecting of the individual well screen (filter) modules 10 is accomplished by connecting the perforated pipes 10.1 by means of clamp connectors 7, as well as connecting the lids 10.6 of the adjacent displacement elements 10.5 by mechanical connection - by means of mechanical connectors 10.9, which are formed by strands positioned between the mechanical catches 10.7, and by pneumatic connection - by means of pneumatic connectors 10.10 located between pneumatic quick couplings 10.8. The mechanical catch 10.7 of the lid 10.6 of the last displacement element 10.5 is connected by means of a hoist rope 11 to the winch on the surface (on or over the ground surface), while to the pneumatic quick coupling 10.8 of this lid a pneumatic conduit 12 is connected, the end of which conduit is connected to a compressor located on the surface. Subsequently, successive modules of the second section of exploitation pipes 6 are inserted into the casing pipes, while connecting them to each other by means of clamp connectors 7. During the insertion of the well screen modules 10 and the second section of exploitation pipes 6 the pressure in the displacement elements 10.5 is regulated by means of the compressor on the surface, via the pneumatic conduit 12, while generating a buoyant force that balances the weight of the well screen modules 10 and the modules of the section of extraction pipes 6, in such a way that the resistance to motion during their insertion into the casing pipes 4 was as low as possible. After a process of introduction of the installation is completed, the displacement elements 10.5 are removed by means of the hoist rope 11, connected to the winch on the surface, and then the casing pipes 4 are removed from the borehole by means of the extraction device 9. The arrangement of the extraction pipe 6 sections and the well screen modules 10 sections thus installed is then equipped with pumping assembly (apparatus).

In another embodiment of the method the casing pipes 4 are filled with water only in its horizontal section.

The well screen module 10 in the embodiment (Fig. 2) includes a matrix of a single section of perforated pipe 10.1 together with surrounding it granular filter material 10.2 arranged around its periphery and which is further located inside the cover 10.3 in the form of a filter mesh sleeve, that sleeve is fixed on the perforated pipe 10.1 by means of slid-clamp bands 10.4. Both ends of the perforated pipe 10.1 are provided with upsets for clamp connectors 7. At least one removable displacement element 10.5 having variable displacement and in the form of a pneumatic sleeve that is equipped with a lid 10.6 at each its end is positioned in the inner space of the section of the perforated pipe 10.1., which each lid 10.6 is equipped with a mechanical catch 10.7 and a pneumatic quick coupling 10.8.

In another embodiment of the well screen module 10, the both lids 10.6 of the same displacement element 10.5 are additionally connected to each other by two additional strands 10.11 positioned outside the displacement element 10.5, wherein a geotextile filter non-woven is used as a material for the cover 10.3.

In a further embodiment of the well screen module 10, both lids 10.6 of the same displacement element 10.5 are additionally connected to each other by means of an additional strand 10.11 located inside the displacement element 10.5.

### List of designated references:

- 1.: Ground water table
- 2.: Water-bearing layer (aquifer)
- 3.: Impermeable layer
- 4.: Casing pipes
- 5.: Feeder
- 6.: Extraction pipes
- 7.: Clamp connector
- 8.: Extraction duct
- 9.: Extraction device
- 10.: Well screen module (filter module)
10.1 Perforated pipe
10.2 Filter material
10.3 Cover
10.4 Band (slid-clamp)
10.5 Displacement element
10.6 Lid
10.7 Mechanical catch
10.8 Pneumatic quick coupling
10.9 Mechanical connector
10.10 Pneumatic connector
10.11 Additional strand
- 11.: Hoist rope
- 12.: Pneumatic conduit

## Claims

1. A method for installation of a modular groundwater well screen in a horizontal borehole having on its both sides a connection to the surface on the ground, consisting in that, sections of casing pipes are introduced into the borehole, made by known methods, through the entire length of the borehole, then into the casing pipes: an exploitation pipe section, well screen modules and again an exploitation pipe section are inserted successively, while connecting such modules in series with one to another during operation of inserting them into the casing pipes, afterwards the casing pipes are removed and the pumping assembly is installed, **characterized in that** before starting an operation of the insertion of an extraction pipe (6) sections and the well screen modules (10), the casing pipe (4) sections, at least in their horizontal segments are filled with water, wherein the well screen modules (10) containing removable displacement elements (10.5) having adjustable displacement are connected one to each other mechanically by means of mechanical connectors (10.9), as well as pneumatically by means of pneumatic connectors (10.10), in the course of attaching successive well screen modules (10), and whereas the last displacement element (10.5) is connected by means of a hoist rope (11) to a winch on the ground surface and via a pneumatic conduit (12) to a compressor, which is designed for regulation of the air pressure therein, thus generating a buoyant force that balances or reduces the weight of the well screen modules (10) and the extraction pipes (6) in such a way as to minimize resistance to motion in the process of they being inserted into the casing pipes (4), while after the installation is completed, the displacement elements (10.5) are removed by means of a hoist rope (11) connected to the winch on the surface.

2. The method according to claim 1, **characterized in that** the insertion of the extraction pipes (6) and the well screen modules (10) into the casing pipes (4) is performed by pulling them in by means of an extraction device (9) via an extraction duct (8).

3. The method according to claim 1, **characterized in that** the well screen modules (10) or the sections of the extraction pipes (6) during their insertion into the casing pipes (4) are connected one to each other by means of clamp connectors (7).

4. Well screen module, containing a matrix made of a perforated pipe together with granular filter material arranged around its outer periphery, **characterized in that** the granular filter material (10.2) is arranged inside a cover (10.3) made of filter mesh or filter geotextile, that cover is fixed on the perforated pipe (10.1) by means of slid-clamp bands (10.4) and further at least one removable displacement element (10.5) of variable displacement is positioned inside the section of the perforated pipe (10.1) which the displacement element is provided with a lid (10.6) at each its end equipped with a mechanical catch (10.7) and a pneumatic quick coupling (10.8).

5. The well screen module according to claim 4, **characterized in that** the lids (10.6) of the displacement element (10.5), which is in the form of a pneumatic sleeve, are connected one to another by at least one additional strand (10.11) located inside or outside the displacement element (10.5).

6. The well screen module according to claim 4, **characterized in that** the perforated pipe (10.1) has upsets at both its ends.

## Patentansprüche

1. Verfahren zum Einbau eines modularen Grundwasserfilters in ein horizontales Bohrloch, das beidenseitig mit der Erdoberfläche verbunden ist, bei dem in das mit bekannten Verfahren gebildeten Bohrloch durch seine gesamte Länge Schutzrohrenabschnitte eingeführt werden, wonach in die Schutzrohre nacheinander ein Förderrohrabschnitt, Grundwasserfiltermodule und wiederum ein Gewinnungsrohrabschnitt eingeführt werden, wobei deren Module während des Einfuhrens in die Schutzrohre reihenweise miteinander verbunden werden, wonach die Schutzrohre entfernt und eine Pumpenanordnung eingebaut werden, **dadurch gekennzeichnet, dass** bevor der Gewinnungsrohrabschnitt (6) und die Grundwasserfiltermodule (10) eingeführt werden, werden die Schutzrohrabschnitte (4) zumindest in ihrem horizontalen Abschnitt mit Wasser befüllt und die entfernbare Verdrängungselemente (10.5) mit einstellbarer Verdrängung enthaltenden Grundwasserfiltermodule (10) miteinander mechanisch mittels mechanischer Verbinder (10.9) sowie pneumatisch mittels pneumatischer Verbinder (10.10) verbunden werden, während die aufeinanderfolgenden Grundwasserfiltermodule (10) angeschlossen werden, und das letzte Verdrängungselement (10.5) mittels eines Hubseils (11) mit einer Winde auf der Bodenoberfläche und über eine pneumatische Leitung (12) mit einem Kompressor verbunden wird, mit dem der Luftdruck darin einstellbar ist, wobei eine Auftriebskraft erzeugt wird, die das Gewicht der Grundwasserfiltermodule (10) und der Förderrohre (6) ausgleicht oder verringert, derart, dass der Bewegungswiderstand beim Einsetzen derselben in die Schutzrohre (4) minimiert wird, und nach dem erfolgten Einbau die Verdrängungselemente (10.5) mittels eines mit der Winde auf der Oberfläche verbundenen Hubseils (11) entfernt werden.

2. Verfahren nach Anspruch 1, **dadurch gekennzeichnet, dass** das Einführen der Förderrohre (6) und der Grundwasserfiltermodule (10) in die Schutzrohre (4) durch deren Einziehen mittels einer Aufzugsvorrichtung (9) über einen Aufzugsschacht (8) erfolgt.

3. Verfahren nach Anspruch 1, **dadurch gekennzeichnet, dass** die Grundwasserfiltermodule (10) oder die Förderrohrabschnitte (6) beim Einführen in die Schutzrohre (4) mittels Klemmverbindern (7) miteinander verbunden sind.

4. Grundwasserfiltermodul, enthaltend eine Stützstruktur aus einem Lochrohr und einem um das Lochrohr herum angeordnetem granuliertem Filtermaterial, **dadurch gekennzeichnet, dass** das granulierte Filtermaterial (10.2) innerhalb einer Abdeckung (10.3) aus einem Filternetz oder einem Filtergeotextil angeordnet ist, die mittels Gleit-Klemmbändern (10.4) am Lochrohr (10.1) fixiert ist, und ferner innerhalb eines Abschnitts des Lochrohrs (10.1) mindestens ein entfernbares Verdrängungselement (10.5) mit einstellbarer Verdrängung angeordnet ist, das an seinen Enden jeweils einen mit einer mechanischen Klinke (10.7) und einer pneumatischen Schnellkupplung (10.8) versehenen Deckel (10.6) aufweist.

5. Grundwasserfiltermodul nach Anspruch 4, **dadurch gekennzeichnet, dass** die Deckel (10.6) des als einen pneumatischen Schlauch ausgebildeten Verdrängungselements (10.5) durch mindestens einen zusätzlichen innerhalb oder außerhalb des Verdrängerelements (10.5) angeordneten Seilzug (10.11) miteinander verbunden sind.

6. Grundwasserfiltermodul nach Anspruch 4, **dadurch gekennzeichnet, dass** das Lochrohr (10.1) an seinen beiden Enden Stauchungen aufweist.

## Revendications

1. Procédé d'installation d'un filtre d'eau souterraine dans un perforage horizontal, possédant une liaison bilatérale avec la surface, consistant en ce que, dans le perforage, réalisé avec des moyens connus, on introduit des sections tes tubes de cuvelage sur toute sa longueur, ensuite dans les tubes de cuvelage on introduit on introduit successivement: une section des tubes d'exploitation, assemblant leurs modules les uns aux autres en série pendant l'introduction dans les tubes de cuvelage, après quoi on retire les tubes de cuvelage et on installe l'équipement de pompage, **caractérisé en ce que** avant de commencer l'introduction des sections des tubes d'exploitation (6) et des modules du filtre (10), les sections des tubes de cuvelage (4) sont remplis d'eau au moins sur le tronçon horizontal, tandis que les modules du filtre (10), comprenant des éléments de déplacement démontables (10.5) à déplacement réglable, pendant le raccordement des modules du filtre successifs (10) on les assemble les uns aux autres mécaniquement au moyen de raccords mécaniques (10.9) et de manière pneumatique au moyen de raccords pneumatiques (10.10), et le dernier élément de déplacement (10.5) on raccorde au moyen d'un câble d'extraction (11) avec un treuil à la surface ainsi qu'au moyen d'un conduit pneumatique (12) avec un compresseur, à l'aide duquel on effectue le réglage de la pression d'air interne, pour engendrer une force de déplacement mettant en équilibre ou diminuant le poids des modules du filtre (10) d'eau souterraine et des tubes d'exploitation (6), de sorte à minimiser les résistances au mouvement, durant leur introduction dans les tubes de cuvelage (4), cependant l'installation étant achevée, les éléments de déplacement (10.5) sont retirés à l'aide du câble d'extraction (11), raccordé au treuil à la surface.

2. Procédé selon la revendication 1, **caractérisé en ce que** l'introduction des tubes d'exploitation (6) ainsi que des modules du filtre (10) dans les tubes de cuvelage (4) est réalisée en les tirant au moyen du dispositif de treuil (9), par l'intermédiaire du conduit d'extraction (8)..

3. Procédé selon la revendication 1, **caractérisé en ce que** les modules du filtre (10) ou les sections des tubes d'exploitation (6), pendant l'introduction dans les tubes de cuvelage (4), sont assembles les uns aux autres au moyen des raccords à serrage (7).

4. Module du filtre de l'eau souterraine, comportant une matrice en tube perforé, avec agencé autour de celui-ci un matériau granulé filtrant, **caractérisé en ce que** le matériau granulé filtrant (10.2) se trouve à l'intérieur d'une enveloppe (10.3) en grille de filtration ou en géotextile de filtration, fixée sur le tube perforé (10.1) au moyen des brides de serrage (10.4), et en outre à l'intérieur de la section du tube perforé (10.1), est situé au moins un élément de déplacement démontable (10.5), à déplacement variable, possédant à chaque extrémité un couvercle (10.6), pourvu d'un cran mécanique (10.7) ainsi que d'un raccord rapide pneumatique (10.8).

5. Module du filtre d'eau souterraine selon la revendication 4, **caractérisé en ce que** les couvercles (10.6) de l'élément de déplacement (10.5), lequel constitue une manche pneumatique, sont raccordés au moyen d'au moins une tringle supplémentaire (10.11) située à l'intérieur ou à l'extérieur de l'élément de déplacement (10.5).

6. Module du filtre d'eau souterraine selon la revendication 4, **caractérisé en ce que** le tube perforé (10.1) possède aux deux extrémités des refoulements.
